# EUROPÄISCHE PATENTSCHRIFT

(11) **EP 3 566 564 B1**
(45) Veröffentlichungstag und Bekanntmachung des Hinweises auf die Patenterteilung: **11.05.2022**
(21) Anmeldenummer: 19161490.8
(22) Anmeldetag: 08.03.2019
(51) Int. Cl.: A01D 41/127

(54) **MÄHDRESCHER SOWIE VERFAHREN ZUM BETREIBEN EINES MÄHDRESCHERS**
COMBINE HARVESTER AND METHOD FOR OPERATING A COMBINE HARVESTER
MOISSONNEUSE-BATTEUSE ET PROCÉDÉ DE FONCTIONNEMENT D'UNE MOISSONNEUSE-BATTEUSE

(30) Priorität: 08.05.2018 DE 102018111077
(43) Veröffentlichungstag der Anmeldung: 13.11.2019
(73) Patentinhaber: CLAAS Selbstfahrende Erntemaschinen GmbH, 33428 Harsewinkel (DE)
(72) Erfinder: Bormann, Bastian, 33334 Gütersloh (DE); Vöcking, Henner, 33397 Rietberg (DE); Wilken, Andreas, 49143 Bissendorf (DE); Baumgarten, Joachim, 48361 Beelen (DE); Bussmann, Christoph, 33428 Harsewinkel (DE); Terörde, Stefan, 48231 Warendorf (DE); Berger, Arthur, 49143 Bissendorf (DE); Dieckmeyer, Sascha, 49326 Melle (DE)
(74) Vertreter: CLAAS Gruppe

(56) Entgegenhaltungen:
- EP-A1- 1 543 712
- EP-A1- 3 180 974
- DE-A1-102013 106 133
- DE-A1-102016 118 203
- US-A- 6 119 442
- US-A1- 2003 014 171

## Beschreibung

Die vorliegende Erfindung betrifft einen Mähdrescher sowie ein Verfahren zum Betreiben eines Mähdreschers. Mähdrescher dienen der Mahd und dem Drusch von Körnerfrüchten als Erntegut. Hierzu umfasst der Mähdrescher mehrere Arbeitsorgane zur Durchführung spezifischer Teilbearbeitungsprozesse eines Gesamtbearbeitungsprozess zur Verarbeitung von Erntegut Dabei erfolgt der Drusch durch eine Dreschvorrichtung, welches aus dem von dem Mähdrescher durch ein Vorsatzgerät, insbesondere ein Schneidwerk, aufgenommenen Erntegut Korngut gewinnt, das nach dem Dreschen einer Abscheidung durch eine Abscheidevorrichtung und einer anschließenden Reinigung durch eine Reinigungsvorrichtung einem Korntank zugeführt wird. Als weitere Bestandteile des Ernteguts bleiben weiter z. B. die Spreu und das Stroh übrig, welche entweder gemeinsam mit dem von einer Häckselvorrichtung zerkleinerten Stroh über das Feld verteilt oder - im Falle des Strohs - auf Schwad z.B. zur späteren Aufnahme durch eine Ballenpresse gelegt werden können. Das Einstellen der verschiedenen Arbeitsorgane stellt an eine Bedienperson hohe Anforderungen, da Änderungen eines Einstellparameters sich bereits innerhalb eines Arbeitsorgans auf andere Einstellparameter bzw. Prozessqualitätsparameter auswirken. So führt beispielsweise die Anhebung der Drehzahl einer Dreschtrommel der Dreschvorrichtung zu einer Erhöhung des Durchsatzes an Erntegut, zugleich erhöht sich aber auch der Anteil an Bruchkorn.

Aus der DE 10 2013 106 133 A1 ist ein Mähdrescher gemäß dem Oberbegriff des Anspruches 1 bekannt. Der aus der DE 10 2013 106 133 A1 bekannte Mähdrescher weist ein Fahrerassistenzsystem zur Ansteuerung der Arbeitsorgane auf, welches einen Speicher zum Hinterlegen von Daten, eine Rechenvorrichtung zur Verarbeitung der im Speicher hinterlegten Daten, sowie eine grafische Benutzerschnittstelle umfasst. Zur Ansteuerung einer Abscheidevorrichtung und einer Reinigungsvorrichtung ist jeweils ein Einstellautomat vorgesehen. Diese Einstellautomaten arbeiten unabhängig voneinander, um das jeweilige Arbeitsorgan in einem optimalen Betriebspunkt zu betreiben. Die Einstellautomaten werden vom Fahrerassistenzsystem automatisch aktiviert, sie lassen sich jedoch durch eine Bedienperson wahlweise aktivieren oder deaktivieren. Während die Arbeitsorgane Abscheidevorrichtung und Reinigungsvorrichtung durch die Einstellautomaten angesteuert werden, um einen optimalen Betrieb unter gegebenen Betriebsbedingungen zu erreichen, obliegt es der Bedienperson die übrigen Arbeitsorgane einzustellen. Dazu muss die Bedienperson auf Änderungen durch einen oder beide Einstellautomaten angemessen und zeitnah reagieren können. Eine wirkungsvolle Gesamtmaschinenregelung lässt sich auf diese Weise nicht realisieren.

Ausgehend von dem Stand der Technik liegt der Erfindung die Aufgabe zugrunde, einen Mähdrescher mit Fahrerassistenzsystem weiterzubilden und zu verbessern, dass eine Gesamtmaschinenregelung bei besonders geringer Beanspruchung der Bedienperson möglich ist.

Diese Aufgabe wird durch einen Mähdrescher gemäß den Merkmalen des Anspruches 1 gelöst.

Vorteilhafte Weiterbildungen sind Gegenstand der Unteransprüche.

Gemäß dem Anspruch 1 wird ein Mähdrescher vorgeschlagen, der mehrere Arbeitsorgane zur Durchführung spezifischer Teilbearbeitungsprozesse eines Gesamtbearbeitungsprozesses zur Verarbeitung von Erntegut sowie ein Fahrerassistenzsystem zur Ansteuerung der Arbeitsorgane, welches einen Speicher zum Hinterlegen von Daten, eine Rechenvorrichtung zur Verarbeitung der im Speicher hinterlegten Daten aufweist, umfasst. Um eine Gesamtmaschinenregelung bei besonders geringer Beanspruchung der Bedienperson zu ermöglichen, ist vorgesehen, dass das Fahrerassistenzsystem mit den jeweiligen zur Durchführung der Teilbearbeitungsprozesses vorgesehenen Arbeitsorganen eigenständig arbeitende Einstellautomaten bildet, welche der Optimierung der Ansteuerung der Arbeitsorgane zur Durchführung der Teilarbeitsprozesse dienen und jeder Einstellautomat Eingangsdaten empfängt und aus diesen autonom jeweils arbeitsorganspezifische Ausgangsdaten generiert, welche zu einer Änderung von Einstellparametern der zugehörigen Arbeitsorgane verwendet werden, wobei zu einer Ansteuerung einzelner Einstellautomaten und eines Datenaustausches der Einstellautomaten untereinander dem Fahrerassistenzsystem ein Prozesssupervisor zugeordnet ist wobei der Prozesssupervisor dazu eingerichtet ist, mit einer Bedienperson zu interagieren, wobei durch die Interaktion wenigstens ein Parameter zumindest eines zur Ansteuerung durch den Prozesssupervisor im Speicher hinterlegten Regelungsprozesses editierbar ist. Wesentlich dabei ist, dass zumindest die Arbeitsorgane, die zur Durchführung spezifischer Teilbearbeitungsprozesse zur Verarbeitung von Erntegut beitragen, jeweils durch einen eigenständig arbeitenden Einstellautomaten angesteuert werden, deren Teilnahme am Gesamtbearbeitungsprozess sowie das Ermöglichen eines Datenaustausches untereinander durch den Prozesssupervisor bestimmt wird. Dem Prozesssupervisor kommt die Aufgabe zu, den Gesamtbearbeitungsprozess zu optimieren, indem dieser gezielt Einfluss auf die Einstellautomaten nimmt, wobei eine Bedienerinteraktion in der Weise zugelassen wird, dass die Bedienperson wenigstens einen Parameter des Regelungsprozesses editieren kann, welches der Ansteuerung der Einstellautomaten durch den Prozesssupervisor zugrunde liegt. Eine Bedienperson im Sinne der Erfindung ist beispielsweise ein Fahrer des Mähdreschers als unmittelbare Bedienperson oder eine Person, die mit dem Fahrerassistenzsystem mittels eines mobilen Datenverarbeitungsgerätes in Verbindung steht oder beispielsweise ein Betriebsleiter, welcher von einer entfernten Hofstelle aus mittels eines Datenverarbeitungsgerätes mit dem Fahrerassistenzsystem in Verbindung steht, bei denen es sich aufgrund einer räumlichen Beabstandung zu dem Mähdrescher um mittelbare Bedienpersonen handelt.

Hierzu ist der Prozesssupervisor dazu eingerichtet, den Gesamtbearbeitungsprozess des Mähdreschers gemäß einer Ernteprozessstrategievorgabe durch eine aufeinander abgestimmte Ansteuerung einzelner Einstellautomaten autonom zu optimieren. Die Ernteprozessstrategievorgabe kann dem Fahrerassistenzsystem aus einer Auswahl an Ernteprozessstrategievorgaben vorgegeben werden. Als auswählbare Ernteprozessstrategievorgaben kommen beispielsweise das Erzielen eines maximalen Durchsatzes, eine zu erreichende Qualität des Erntegutes, ein effizienter oder ausbalancierter Betrieb des Mähdreschers und dergleichen mehr in Betracht. Die auswählbaren Ernteprozessstrategievorgaben sind auch untereinander kombinierbar, beispielsweise durch Gewichtung einzelner Ernteprozessstrategievorgaben. Der Prozesssupervisor kann sich an der ausgewählten Ernteprozessstrategievorgabe orientieren, um autonom die von den Arbeitsorganen durchzuführenden Teilbearbeitungsprozesse durch eine dezidierte Ansteuerung einzelner Einstellautomaten zu optimieren.

Dabei können zur Durchführung eines jeweiligen Teilbearbeitungsprozesses mehrere unterschiedliche Teilstrategien hinterlegt sein, die von den jeweiligen Einstellautomaten zur Optimierung des diesen zugeordneten Arbeitsorgans heranziehbar sind. Teilstrategien können Vorgaben der einzelnen Einstellautomaten für Grenzen von Bewertungsgrößen und/oder Einstellgrößen, Gewichtungen, Zielwerten und/oder Prioritäten sein.

Bevorzugt kann zur Ansteuerung einzelner Einstellautomaten und des Datenaustausches der Einstellautomaten untereinander durch den Prozesssupervisor zumindest ein Regelungsprozess hinterlegt sein, welcher bestehende Abhängigkeiten zwischen Einstellparametern und Prozessqualitätsparametern der Teilbearbeitungsprozesse untereinander umfasst.

Bevorzugt kann der zur Ansteuerung durch den Prozesssupervisor hinterlegte zumindest eine Regelungsprozess bestehende Abhängigkeiten zwischen Einstellparametern und Prozessqualitätsparametern der Teilbearbeitungsprozesse untereinander umfassen. Bevorzugt kann der zumindest eine Regelungsprozess in dem Speicher des Fahrerassistenzsystems hinterlegt sein, dem der Prozesssupervisor zugeordnet ist. Der zumindest eine hinterlegte Regelungsprozess kann auf Grundlage eines Regelwerkes oder einer Reglerstruktur erfolgen. Unter Einstellparametern sind arbeitsorganspezifische Maschinenparameter zur Einstellung von Erntegutbehandlungsmitteln durch zumindest eine den Erntegutbehandlungsmitteln zugeordnete Aktuatorik zu verstehen, welche von den Einstellautomaten eigenständig ermittelt werden. Einstellparameter des Arbeitsorgans Vorsatzgeräte respektive Schneidwerk sind unter anderem Messerbalkenhöhe, Schnittwinkel, Haspelposition und dergleichen mehr. Erntegutbehandlungsmittel im Fall des Schneidwerks sind beispielsweise Messerbalken, Haspel, Einzugswalze und dergleichen, denen eine Aktuatorik zugeordnet ist, um diese Erntegutbehandlungsmittel einzustellen und/oder zu betreiben. Unter dem Begriff Prozessqualitätsparametern sind im Fall des Arbeitsorganes Schneidwerks Aufnahmeverluste, Schnittährenverluste, Spritzkörnerverluste, etc. zu verstehen. Prozessqualitätsparameter sind ein Bewertungskriterium für eine optimale Einstellung des Arbeitsorgans durch den Einstellautomaten. Entsprechendes gilt für die weiteren zur Durchführung von Teilbearbeitungsprozessen vorgesehenen Arbeitsorgane des Mähdreschers.

Weiterhin kann der Prozesssupervisor dazu eingerichtet sein, einen oder mehrere Einstellautomaten koordiniert anzusteuern und betriebssituationsabhängig eine Gewichtungsverschiebung in der Erreichung oder Einhaltung von Prozessqualitätsparametern zumindest eines Einstellautomaten durchzuführen. Um den Gesamtbearbeitungsprozess des Mähdreschers zu optimieren, kann es erforderlich sein, die Erreichung bzw. Einhaltung eines Prozessqualitätsparameters des einen Arbeitsorgans der Erreichung bzw. Einhaltung eines Prozessqualitätsparameters anderen Arbeitsorgans unterzuordnen, indem die Gewichtung verändert wird. Die Vorgabe der Ernteprozessstrategie, die auf einen maximalen Durchsatz an Erntegut gerichtet ist, führt dazu, dass die jeweiligen Arbeitsorgane durch entsprechende, von den korrespondierenden Einstellautomaten eigenständig bestimmten Einstellparameter angesteuert werden, um jeweils einen maximalen Durchsatz zu gewährleisten. Entsprechend dieser Ernteprozessstrategievorgabe "maximaler Durchsatz" findet eine entsprechende Gewichtung der Prozessqualitätsparameter der jeweiligen Arbeitsorgane statt, indem unter anderem höhere Erntegutverluste und/oder Qualitätsverluste in Kauf genommen werden, als dies bei der Ernteprozessstrategievorgabe "Qualität des Erntegutes" der Fall ist. Dies kann jedoch dazu führen, dass es innerhalb einzelner Teilbearbeitungsprozesse zu einer Überlastung des Arbeitsorgans kommen kann, wodurch die Erreichung der Ernteprozessstrategievorgabe "maximaler Durchsatz" gefährdet wird. Durch eine betriebssituationsabhängige Ausbalancierung der Gewichtung wird gewährleistet, dass es zu einer aufeinander abgestimmten Gesamtoptimierung aller Arbeitsorgane des Mähdreschers kommt.

Des Weiteren kann der Prozesssupervisor dazu eingerichtet sein, aufgrund der Gewichtungsverschiebung den zumindest einen Einstellautomaten derart anzusteuern, um das betreffende, von dem jeweiligen Einstellautomaten angesteuerte Arbeitsorgan außerhalb des jeweiligen optimalen Betriebspunktes zu betreiben. Dem Betreiben zumindest eines Arbeitsorgans außerhalb seines jeweiligen optimalen Betriebspunktes liegt der Gedanke zugrunde, mögliche Auswirkungen der für das Arbeitsorgan spezifischen Einstellungen auf andere, insbesondere nachgeordnete, Arbeitsorgane zu minimieren, die der Erreichung einer Gesamtoptimierung im Rahmen der gewählten Ernteprozessstrategievorgabe entgegenstehen.

Weiterhin kann der Prozesssupervisor zur Vorgabe von abweichenden Teilstrategien für zumindest einen der Einstellautomaten eingerichtet sein. Dies kann dann der Fall sein, wenn die Erreichung einer Gesamtoptimierung im Rahmen der gewählten Ernteprozessstrategievorgabe und der zugehörigen originären Teilstrategien in Folge sich ändernder äußerer Rahmenbedingungen nicht eingehalten werden kann.

Des Weiteren kann der Prozesssupervisor zur autonomen Vorgabe von Einstellgrenzen eingerichtet sein, innerhalb derer die Einstellautomaten die jeweiligen Arbeitsorgane ansteuern. Alternativ oder zusätzlich kann der Prozesssupervisor zur autonomen Vorgabe von Zielwerten der Prozessqualitätsparameter eingerichtet sein, innerhalb derer die Einstellautomaten die jeweiligen Arbeitsorgane ansteuern. So kann eine Reduzierung eines Bruchkornanteils als Prozessqualitätsparameter dadurch erreicht werden, dass der Zielwert für den Prozessqualitätsparameter Kornanteil in der Überkehr reduziert wird. Dies ist beispielsweise durch eine Erhöhung des Prozessqualitätsparameters Ausdrusch erreichbar, indem der dem Arbeitsorgan Dreschvorrichtung zugeordnete Einstellautomat die Einstellparameter entsprechend verändert. Ein weiteres Beispiel stellt das Absenken der Prozessqualitätsparameter "Verlustgrenze", welcher entsprechend der unterschiedlichen Arbeitsorgane verschiedene Ausprägungen haben kann, bei einem Erreichen eines anderen Grenzwertes der Prozessqualitätsparameter oder der Einstellparameter, wie dem Erreichen der maximalen Motorauslastung, dar. Weiterhin kann der Prozesssupervisor zwischen Maximalwerten und Sollwerten von Prozessqualitätsparametern unterscheiden bzw. kann diese bei der Ansteuerung der Einstellautomaten zugrunde legen. Beispielhaft hierfür sei die Einhaltung der sogenannten Überkehrgrenze als Maximalwert und das Überkehrniveau als Sollwert angeführt.

Insbesondere kann der Prozesssupervisor zur Optimierung des Gesamtbearbeitungsprozesses bei einem Betrieb des Mähdreschers im Teillastbetrieb eingerichtet sein. So kann beispielsweise aufgrund eines fahrgeschwindigkeitsbedingten Teillastbetriebes die Ernteprozessstrategievorgabe "maximaler Durchsatz" nicht erreicht werden. Um dennoch den Gesamtbearbeitungsprozess im Rahmen solcher Randbedingungen zu optimieren, kann der Prozesssupervisor Prioritäten selbsttätig verschieben bzw. neu festlegen.

Bevorzugt kann zur Abbildung funktionaler Zusammenhänge eines von einem Arbeitsorgan durchzuführenden Teilbearbeitungsprozesses mindestens einem Prozessqualitätsparameter zumindest ein adaptives Kennlinienfeld zugeordnet sein, wobei dieser mindestens eine Prozessqualitätsparameter als Ausgangsgröße des zumindest einen Kennfeldes definiert sein kann. Anhand dieses funktionalen Zusammenhangs eines Systemmodells für ein jeweiliges Arbeitsorgan kann in Abhängigkeit von unterschiedlichen Betriebssituationen jeweils auf Einstellparameter geschlossen werden, die eine optimierte Durchführung des Teilbearbeitungsprozesses ermöglichen.

Weiterhin kann der Prozesssupervisor zum Empfang von externen Daten eingerichtet sein, welche einen Einfluss auf die Prozessqualitätsparameter der Teilbearbeitungsprozesse haben. Bei den externen Daten kann es sich vorzugsweise um Daten und Informationen handeln, die äußere, nicht direkt durch Sensorsysteme des Mähdreschers messbare Einflüsse auf den Gesamtbearbeitungsprozess darstellen. Solche Einflüsse sind beispielsweise das Wetter und/oder Terminvorgaben, welche ein zur Verfügung stehendes Zeitfenster für das Ernten eines Feldes beeinflussen bzw. beschränken. Externe Daten sind somit unter anderem aktuelle Wetterdaten sowie Logistikdaten, welche einen Einfluss auf die Durchführung des Gesamtbearbeitungsprozesses haben können. Zu den externen Daten kann aber auch eine Eingabe durch die mittelbare oder unmittelbare Bedienperson des Mähdreschers zählen. Logistikdaten umfassen beispielsweise Terminvorgaben für das Abernten eines Schlages oder die Koordination des Mähdreschers als einem Erntefahrzeug innerhalb einer mehrere Ernte-und/oder Transportfahrzeuge umfassenden Erntelogistikkette. Hierzu kann der Prozesssupervisor externe Daten eines Flottenmanagementsystems empfangen, welche neben Informationen zu einem zu bearbeitenden Schlag auch Informationen über die vorhandenen Transportquantitäten enthalten. Externe Daten können auch anderen Ernte- oder Transportfahrzeugs der Erntelogistikkette übermittelt werden. Aufgrund dessen kann der Prozesssupervisor einzelne Teilstrategievorgaben der Einstellautomaten anpassen. So kann beispielsweise bei einer begrenzt vorhandenen Transportkapazität der Prozessqualitätsparameter "Durchsatz" des Mähdreschers durch eine entsprechende Ansteuerung der Einstellautomaten darauf abgestimmt werden, während die Zielerreichung anderer Prozessqualitätsparameter, welche die Ergebnisqualität bzw. Verluste der Arbeitsorgane zum Gegenstand haben, durch eine entsprechende Ansteuerung der Einstellautomaten stärker berücksichtigt werden.

Insbesondere kann der Prozesssupervisor zur autonomen Ableitung von Maßnahmen in Abhängigkeit von den empfangenen externen Daten eingerichtet sein. So kann der Prozesssupervisor unter Berücksichtigung der externen Daten als eine Maßnahme Teilstrategievorgaben anpassen. Zum Beispiel die Grenzen der Prozessqualitätsparameter verändern oder Teilstrategien der Einstellautomaten verändern. Eine weitere Maßnahme kann das Einplanen von Wartungs- oder Einstellmaßnahmen sein, welche eine Unterbrechung des Erntebetriebes erforderlich machen. Diese können aufgrund der zur Verfügung stehenden Logistikdaten in den Ernteprozessablauf integriert werden, um die Unterbrechung des Erntebetriebes zu minimieren. Beispielhaft seien für derartige Wartungs- oder Einstellmaßnahmen das Überprüfen und/oder Kalibrieren von Sensoren des Mähdreschers, Umbauarbeiten an der Dreschvorrichtung oder sonstige Einstellungen an Arbeitsorganen, die nur ohne Materialfluss im Mähdrescher oder nicht von der Kabine aus durchführbar sind, genannt.

Gemäß einer Ausgestaltung sind als Arbeitsorgane zumindest ein Vorsatzgerät, insbesondere ein Getreideschneidwerk, eine Dreschvorrichtung, eine Abscheidevorrichtung, die als Hordenschüttler oder als eine Axialabscheidevorrichtung mit einem oder zwei Trennrotoren ausgebildet sein kann, eine Reinigungsvorrichtung sowie eine Verteilvorrichtung vorgesehen. Die Verteilvorrichtung kann eine Spreuverteileinrichtung, eine Häckseleinrichtung sowie eine Verteileinrichtung zur Verteilung zumindest des von der Häckseleinrichtung bereitgestellten Erntegutes umfassen.

Dabei können zur Ansteuerung dieser Arbeitsorgane als Einstellautomaten zumindest ein Vorsatzgeräteautomat, ein Dreschautomat, ein Trennautomat, ein Reinigungsautomat sowie ein Verteilautomat vorgesehen sein. Für jeden Teilbearbeitungsprozess sind die funktionalen Zusammenhänge vorzugsweise in dem Speicher des Fahrerassistenzsystems hinterlegt, auf welchen die jeweiligen Einstellautomaten zur autonomen Bestimmung der Einstellparameter des korrespondierenden Arbeitsorgans zugreifen. Dabei werden die funktionalen Zusammenhänge im laufenden Erntebetrieb kontinuierlich auf den aktuellen Ernteprozesszustand abgeglichen.

Weiterhin ist es vorteilhaft, wenn zumindest ein Einstellautomat zumindest zwei Unterautomaten aufweist. Auf diese Weise lässt sich die Komplexität der Regelung von Teilbearbeitungsprozessen eines Arbeitsorganes reduzieren, indem der Teilbearbeitungsprozess feiner untergliedert wird. Dies ist bei der selbsttätigen Bestimmung von Einstellparametern durch die Unterautomaten von Vorteil. So kann der Vorsatzgeräteautomat als Unterautomaten einen Haspelautomaten und einen Einzugsautomaten umfassen, deren Funktionsweise mit der der anderen Einstellautomaten korrespondiert.

Gemäß einer Weiterbildung kann der Prozesssupervisor dazu eingerichtet sein, wenigstens eine Vorgabe für eine Ernteprozessstrategievorgabe und/oder zumindest einen Prozessqualitätsparameter durch die Interaktion mit der Bedienperson als externe Daten zu empfangen und einzustellen. Hierzu kann durch die Bedienperson eine unmittelbare Verstellung wenigstens eines Prozessqualitätsparameters durchgeführt werden, indem diese einen Maximalwert oder einen Minimalwert vorgibt. Beispielsweise kann als ein Minimalwert ein Besatz, d.h. der Anteil an Nichtkornbestandteilen im Korntank, von 1% vorgegeben werden. Ebenso kann als Vorgabe alternativ oder ergänzend eine anzustrebende Tendenz für einen Prozessqualitätsparameter von der Bedienperson oder dem Prozesssupervisor vorgegeben werden. Beispielsweise kann aufgrund einer Teilstrategie für ein Überkehrvolumen ein Maximalwert von 70% vorgegeben sein. Zusätzlich kann die Bedienperson durch die Interaktion mit dem Prozesssupervisor eine Tendenz direkt vorgeben, mit dem Ziel ein möglichst niedriges Überkehrvolumen zu erreichen.

Bevorzugt kann der Prozesssupervisor dazu eingerichtet sein, mit der Bedienperson sprachgesteuert zu interagieren. Die Interaktion zwischen dem Prozesssupervisor und der Bedienperson kann insbesondere natürlichsprachig erfolgen. Eine sprachgesteuerte Interaktion vereinfacht die Kommunikation zwischen dem Prozesssupervisor und der Bedienperson. Dabei kann die sprachgesteuerte Interaktion in Form von durch die grafische Benutzerschnittstelle visualisierten Dialogen erfolgen oder durch Spracheingabe und Sprachausgabe. Die Initiierung der Interaktion kann dabei situationsabhängig durch den Prozesssupervisor oder die Bedienperson erfolgen.

Gemäß einer Weiterbildung kann der Prozesssupervisor dazu eingerichtet sein, die mittelbare oder unmittelbare stattfindende Interaktion zwischen dem Fahrerassistenzsystem und der Bedienperson zu erfassen und auszuwerten. Hieraus können mögliche Problemstellungen abgeleitet werden, zu deren Abhilfe in einem von dem Prozesssupervisor initiierten interaktiven Dialog gezielt Vorschläge unterbreitet werden können. Eine erfassbare mittelbare Interaktion ist beispielsweise ein häufiges Rückwärtsfahren oder eine wiederholte Änderung der Fahrgeschwindigkeit während eines Erntevorgangs durch die Bedienperson. Eine erfassbare unmittelbare Interaktion stellt die Häufigkeit von Anfragen an das Fahrerassistenzsystem insgesamt oder im Kontext beispielsweise mit einer Einstellung eines bestimmten Arbeitsorgans dar.

Weiterhin kann der Prozesssupervisor dazu eingerichtet sein, aufgrund von Plausibilitätsprüfungen und/oder durch eine Analyse einer Gesamtmaschineneinstellung selbsttätig mit der Bedienperson in Interaktion zu treten. Hierzu können die von den Sensorsystemen des Mähdreschers bereitgestellten und der Rechenvorrichtung ausgewerteten Daten auf Plausibilität geprüft werden. Bei den Daten kann es sich um die Prozessqualitätsparameter als auch um Messwerte der verschiedenen Sensorsysteme handeln. Die Plausibilitätsprüfung kann bei einer Erkennung unplausibeler Daten für Prozessqualitätsparameter und/oder Messwerte dazu führen, dass der Prozesssupervisor einen bedarfsorientieren interaktiven Dialog startet, um Abhilfe zu schaffen. Als mögliche Maßnahmen zur Abhilfe kann von dem Prozesssupervisor die Kalibrierung eines Sensors oder die Anpassung von Einstellgrenzen eines Prozessqualitätsparameters vorgeschlagen werden. Das Ergebnis einer Analyse der Gesamtmaschineneinstellung kann gleichfalls herangezogen werden, um selbsttätig mit der Bedienperson in Interaktion zu treten und im Rahmen eines bedarfsorientieren interaktiven Dialoges Abhilfe zu schaffen.

Gemäß einer Weiterbildung kann der Prozesssupervisor dazu eingerichtet sein, die grafische Benutzerschnittstelle bei einer Veränderung einer Ernteprozessstrategievorgabe oder einer Teilstrategie durch eine Bedienperson anzusteuern, um daraus resultierende Veränderungen von Einstellgrenzen wenigstens eines Prozessqualitätsparameters zu visualisieren. Die Bedienperson erhält somit einen unmittelbaren Überblick auf die aus der Veränderung einer Ernteprozessstrategievorgabe oder einer Teilstrategie abgeleiteten Reaktionen des Prozesssupervisors.

Dabei kann die grafische Benutzerschnittstelle zur Visualisierung der Einstellgrenzen auf der Basis von Absolutwerten des wenigstens einen Prozessqualitätsparameters eingerichtet sein. Hierfür können die jeweiligen Minimal- und Maximalwerte des wenigstens einen Prozessqualitätsparameters dargestellt werden, vorzugsweise unter Verwendung geometrischer Formen.

Weiterhin kann die grafische Benutzerschnittstelle zur Visualisierung einer Tendenz des wenigstens einen Prozessqualitätsparameters eingerichtet sein. Hierzu kann zumindest ein Tendenzindikator vorgesehen sein, der durch die Bedienerperson aktivierbar ist.

Gemäß einer bevorzugten Weiterbildung kann die grafische Benutzerschnittstelle dazu eingerichtet sein, zusätzlich einen aktuellen Istwert des wenigstens einen Prozessqualitätsparameters darzustellen. Dies ermöglicht es der Bedienperson, den Einfluss bzw. die Auswirkungen der von ihr im Rahmen der Interaktion mit dem Prozesssupervisor vorgenommenen Änderungen zeitnah nachzuverfolgen.

Weiterhin wird die eingangs gestellte Aufgabe durch ein Verfahren um Betreiben eines Mähdreschers gemäß den Merkmalen des Anspruches 23 gelöst.

Die vorliegende Erfindung wird nachstehend anhand eines in den Zeichnungen dargestellten Ausführungsbeispieles näher erläutert.

Es zeigen:
- Fig. 1: eine schematische Darstellung eines Mähdreschers in Seitenansicht;
- Fig. 2: eine schematische Darstellung des Funktionsprinzips von Einstellautomaten;
- Fig. 3: eine schematische Darstellung des Funktionsprinzips eines Prozesssupervisors; und
- Fig. 4: eine schematische Darstellung einer Visualisierung einer Bedieneroberfläche zur Einstellung einer Erntestrategievorgabe und eines korrespondierenden Prozessqualitätsparameters.

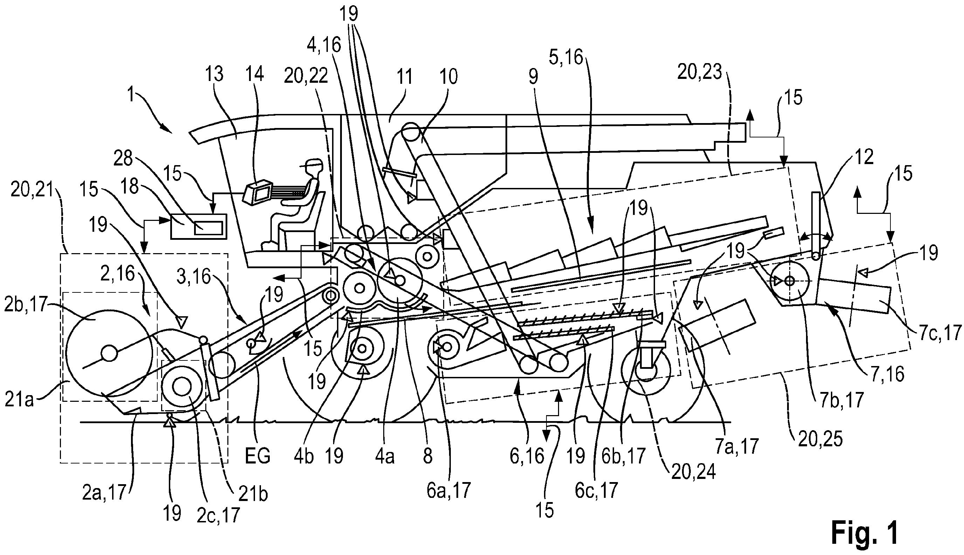

Ein in Fig. 1 schematisch dargestellter Mähdrescher 1 nimmt in seinem frontseitigen Bereich ein als Schneidwerk 2 ausgebildetes Vorsatzgerät auf, welches in an sich bekannter Weise mit einem Schrägförderer 3 des Mähdreschers 1 verbunden ist. Ein den Schrägförderer 3 durchlaufender Erntegutstrom EG wird von dem Schrägförderer 3 an eine Dreschvorrichtung 4 des Mähdreschers 2 übergeben. Von der Dreschvorrichtung 4 wird ein austretender Teilgutstrom des Erntegutstroms EG, der im Wesentlichen Nichtkornbestandteile wie Spreu und Stroh enthält, an eine als Hordenschüttler ausgeführte Trennvorrichtung 5 übergeben. Ein weiterer Teilgutstrom, der im Wesentlichen aus dem Erntegut abgeschiedene Körner enthält, gelangt von der Dreschvorrichtung 4 auf einen Förderboden 8. Es liegt im Rahmen der Erfindung, dass die Trennvorrichtung 5 auch als an sich bekannter und deshalb nicht dargestellter Trennrotor ausgeführt sein kann. Von der Trennvorrichtung 5 wird der Teilgutstrom des Erntegutsstroms EG so gefördert, dass in dem Teilgutstrom 5 enthaltene freibewegliche Körner im untenseitigen Bereich der Trennvorrichtung 5 abgeschieden werden. Sowohl die von der Dreschvorrichtung 4 als auch durch die Trennvorrichtung 5 aus dem Erntegutstrom EG abgeschiedenen Körner werden über einen Rücklaufboden 9 und Förderboden 8 einer Reinigungsvorrichtung 6 zugeführt. Von der Reinigungsvorrichtung 6 gelangt ein gereinigter Körnerstrom schließlich mittels einer Fördervorrichtung 10 in einen Korntank 11 des Mähdreschers 1.

Im rückwärtigen Bereich der als Hordenschüttler ausgeführten Trennvorrichtung 5 ist dieser eine Häcksel- und Verteilvorrichtung 7 nachgeordnet. Der Häcksel- und Verteilvorrichtung 7 wird die Trennvorrichtung 5 in ihrem rückwärtigen Bereich verlassendes Stroh zugeführt, welches wahlweise direkt auf dem Boden in einem Schwad abgelegt oder von der Häcksel- und Verteilvorrichtung 7 zerkleinert und vorzugsweise im Wesentlichen über die Breite des Vorsatzgerätes 2 verteilt auf dem Boden ausgebracht wird. Für eine Ablage des Strohs auf dem Boden ist eine sogenannte Strohklappe 12 vorgesehen, durch welche das Stroh an der Häcksel- und Verteilvorrichtung 7 vorbei umgelenkt wird.

Das als Getreideschneidwerk ausgebildete Vorsatzgerät 2 umfasst einen oszillierend angetriebenen Messerbalken 2a, eine positionsveränderliche Haspel 2b sowie eine Einzugsschnecke 2c. Die Dreschvorrichtung 4 umfasst zumindest eine drehzahlvariabel antreibbare Dreschtrommel 4a, welche untenseitig abschnittsweise von zumindest einem Dreschkorb 4b ummantelt ist. Bevorzugt ist die Dreschvorrichtung 4 als ein Mehrtrommeldreschwerk ausgebildet. Der Abstand des Dreschkorbes 4b zu der zumindest einen Dreschtrommel 4a ist veränderbar. Die Öffnungsweite des Dreschkorbes 4b ist veränderbar. Die Reinigungsvorrichtung 6 weist ein drehzahlvariables Gebläse 6a, eine neigungsveränderliche Siebanordnung mit zumindest einem Obersieb 6b und einem Untersieb 6c auf. Das Obersieb 6b und das Untersieb 6c werden oszillierend angetrieben und weisen Sieböffnungen veränderlicher Öffnungsweite auf. Die Häcksel- und Verteilvorrichtung 7 umfasst eine Spreufördereinrichtung 7a, eine drehzahlvariabel antreibbare Häckseleinrichtung 7b sowie eine Verteileinrichtung 7c. Bevorzugt ist die Verteileinrichtung 7c als Radialverteiler ausgebildet. Die Häckseleinrichtung 7b umfasst eine rotierend angetriebene Messertrommel sowie eine positionsveränderbare Gegenmesseranordnung. Die Spreufördereinrichtung 7a ist als Spreuwurfgebläse, welches die Spreu der Verteileinrichtung 7c zuführt, um gemeinsam mit dem gehäckselten Stroh von der Verteileinrichtung 7c verteilt zu werden, oder als Spreuverteilgebläse, welche die Spreu unmittelbar auf dem Boden verteilt, betreibbar.

Das Vorsatzgerät 2, die Dreschvorrichtung 4, die Trennvorrichtung 5, die Reinigungsvorrichtung 6 sowie die Häcksel- und Verteilvorrichtung 7 werden nachfolgend verallgemeinernd als Arbeitsorgane 16 bezeichnet, die der Durchführung von arbeitsorganspezifischen Teilbearbeitungsprozessen eines Gesamtbearbeitungsprozesses dienen. Die nicht abschließend aufgezählten Komponenten 2a, 2b, 2c, 4a, 4b, 6a, 6b, 6c, 7a, 7b, 7c der Arbeitsorgane 16 werden nachfolgend verallgemeinernd als Erntegutbehandlungsmittel 17 bezeichnet.

Weiter verfügt der Mähdrescher 1 über eine Fahrerkabine 13, in der zumindest eine grafische Benutzerschnittstelle 14 angeordnet ist, welche an ein Bussystem 15 des Mähdreschers 1 angeschlossen ist. Ein Fahrerassistenzsystem 18 kommuniziert durch das Bussystem 15 in an sich bekannter Weise mit der grafischen Benutzerschnittstelle 14 sowie einer Vielzahl von Sensorsystemen 19. Einzelheiten bezüglich der Struktur der Sensorsysteme 19 sind detailliert in der Offenlegungsschrift DE 101 47 733 A1 beschrieben, sodass im Folgenden die Struktur der Sensorsysteme 19 nicht nochmals beschrieben wird.

Das Fahrerassistenzsystem 18 ist zur Ansteuerung der Arbeitsorgane 16 vorgesehen, wobei es eine Bedienperson des Mähdreschers 1 bei der Optimierung der Einstellung der Arbeitsorgane 16 unter Berücksichtigung von Erntebedingungen unterstützen soll. Hierzu bilden das Vorsatzgerät 2, die Dreschvorrichtung 4, die Trennvorrichtung 5, die Reinigungsvorrichtung 6 sowie die Häcksel- und Verteilvorrichtung 7 jeweils gemeinsam mit dem Fahrerassistenzsystem 18 einen autonomen arbeitsorganspezifischen Einstellautomaten 20. Als Einstellautomaten 20 sind ein Vorsatzgeräteautomat 21, ein Dreschautomat 22, ein Trennautomat 23, ein Reinigungsautomat 24 sowie ein Verteilautomat 25 vorgesehen. Jeder der Einstellautomaten 20 kann Unterautomaten aufweisen, welche der autonomen Ansteuerung von verschiedenen Erntegutbehandlungsmitteln 17 eines Arbeitsorgans 16 dienen. So kann der Vorsatzgeräteautomat 20 zwei Unterautomaten umfassen, einen Haspelautomaten21a, welcher der Ansteuerung der Haspel 2b dient, sowie einen Einzugsautomaten 21b, welcher der Ansteuerung der Einzugsschnecke 2c dient. Durch das Fahrerassistenzsystem werden mit den jeweiligen zur Durchführung von Teilbearbeitungsprozesse vorgesehenen Arbeitsorganen 16 eigenständig arbeitende Einstellautomaten 20 gebildet, welche der Optimierung der Ansteuerung der Arbeitsorgane 16 zur Durchführung der Teilarbeitsprozesse dienen. Teilbearbeitungsprozesse des Vorsatzgerätes 2 sind die Gutannahme durch die Haspel 2b sowie Abförderung des Erntegutstroms EG durch die Einzugsschnecke 2c. Teilbearbeitungsprozesse von Dreschvorrichtung 4, Trennvorrichtung 5, Reinigungsvorrichtung 6 sowie Häcksel- und Verteilvorrichtung 7 sind entsprechend insbesondere das Dreschen, Trennen, Reinigen sowie Häckseln- und Verteilen des Erntegutstroms EG.

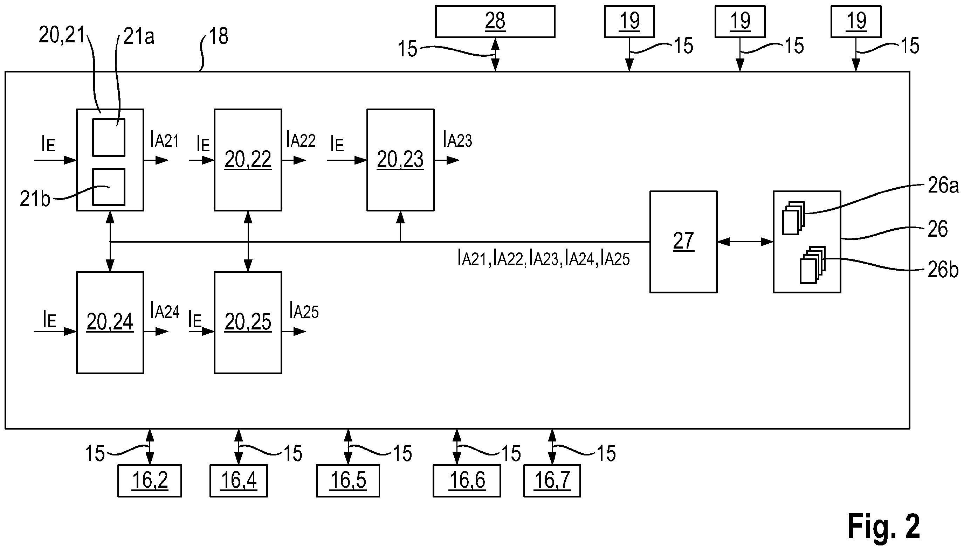

In Fig. 2 ist schematisch das Funktionsprinzip der Einstellautomaten 20 dargestellt. Das Fahrerassistenzsystem 18 umfasst einen Speicher 26 sowie eine Rechenvorrichtung 27 zur Verarbeitung von in dem Speicher 26 hinterlegten Daten. Von den Sensorsystemen 19 erfasste Daten der einzelnen Arbeitsorganen 16 bzw. ihrer Erntegutbehandlungsmittel 17 werden dem jeweiligen Einstellautomaten 20 als Eingangsdaten I_{E} zur Verfügung gestellt. Die Einstellautomaten 20 generieren autonom jeweils arbeitsorganspezifische Ausgangsdaten I_{A21}, I_{A22}, I_{A23}, I_{A24}, I_{A25}, welche zu einer Änderung von Einstellparametern der zugehörigen Arbeitsorgane 16 bzw. ihrer Erntegutbehandlungsmittel 17 verwendet werden. Die arbeitsorganspezifischen Ausgangsdaten I_{A21}, I_{A22}, I_{A23}, I_{A24}, I_{A25} werden von dem Fahrerassistenzsystem 18 dabei nicht nur dem jeweiligen spezifischen Einstellautomaten 20 sondern auch allen anderen Einstellautomaten 20 zur Verfügung gestellt.

In dem Speicher 26 sind zur Durchführung des Gesamtbearbeitungsprozess des Mähdreschers 1 Ernteprozessstrategievorgaben 26a auswählbar hinterlegt. Die Ernteprozessstrategievorgaben 26a sind mittels der grafischen Benutzerschnittstelle 14 darstellbar und auswählbar. Als auswählbare Ernteprozessstrategievorgaben 26a kommen beispielsweise das Erzielen eines maximalen Durchsatzes, eine zu erreichende Qualität des bearbeiteten Erntegutes hinsichtlich Sauberkeit und/oder Bruchkornanteil, ein effizienter Betrieb des Mähdreschers 1 und dergleichen mehr in Betracht. Zur Ausbildung der Einstellautomaten 20 durch das Fahrerassistenzsystem 18 und das jeweilige Arbeitsorgan 16 sind jeweils eine Vielzahl von Teilstrategien 26b in dem Speicher 26 auswählbar hinterlegt. Die jeweilige für einen Einstellautomaten 20 ausgewählte Teilstrategie 26b wird von der Rechenvorrichtung 27 umgesetzt, indem diese die Einstellparameter autonom ermittelt und dem entsprechenden Arbeitsorgan 16 vorgibt.

Zur Abbildung funktionaler Zusammenhänge eines von dem jeweiligen Arbeitsorgan 16 durchzuführenden Teilbearbeitungsprozesses ist mindestens einem Prozessqualitätsparameter zumindest ein adaptives Kennlinienfeld zugeordnet. Dabei ist dieser mindestens eine Prozessqualitätsparameter als Ausgangsgröße des zumindest einen Kennfeldes definiert. Anhand dieses funktionalen Zusammenhangs eines Systemmodells für das jeweiliges Arbeitsorgan 16 wird von den Einstellautomaten 20 in Abhängigkeit von den unterschiedlichen Betriebssituationen jeweils auf Einstellparameter der Arbeitsorgane 16 geschlossen, die eine optimierte Durchführung des jeweiligen Teilbearbeitungsprozesses ermöglichen. Zur zyklischen Adaption der Kennlinienfelder werden die von den Sensorsystemen 19 erfassten Daten verwendet.

Das Fahrerassistenzsystem 18, welches mit den jeweiligen zur Durchführung der Teilbearbeitungsprozesse vorgesehenen Arbeitsorgane 16 eigenständig arbeitende Einstellautomaten 20 bildet, welche der Optimierung der Ansteuerung der Arbeitsorgane 16 zur Durchführung der Teilarbeitsprozesse dienen, umfasst weiterhin einen Prozesssupervisor 28. Der Prozesssupervisor 28 ist dem Fahrerassistenzsystem 18 zugeordnet. Insbesondere kann der Prozesssupervisor 28 in das Fahrerassistenzsystem 18 integriert sein. Der Prozesssupervisor 28 ist zu einer Aktivierung einzelner Einstellautomaten 20 und eines Datenaustausches der Einstellautomaten 20 untereinander eingerichtet. Dem Prozesssupervisor 28 kommt die Aufgabe zu, den Gesamtbearbeitungsprozess des Mähdreschers 1 gemäß einer ausgewählten Ernteprozessstrategievorgabe durch eine aufeinander abgestimmte Ansteuerung der einzelnen Einstellautomaten 20 autonom zu optimieren. Dies geschieht, indem der Prozesssupervisor 28 einzelne oder alle Einstellautomaten 20 mittels zumindest eines Regelungsprozesses, der als ein Regelwerk oder eine Reglerstruktur ausgeführt ist, regelt, wobei die Umsetzung im Fall des in das Fahrerassistenzsystems 18 integrierten Prozesssupervisors 28 durch die Rechenvorrichtung 27 erfolgt. Der zumindest eine Regelungsprozess zur Ansteuerung der Einstellautomaten 20 und des Datenaustauschs durch den Prozesssupervisor 28 ist in dem Speicher 26 hinterlegt. Der zumindest eine Regelungsprozess umfasst und berücksichtigt bestehende Abhängigkeiten zwischen Einstellparametern und Prozessqualitätsparametern der Teilbearbeitungsprozesse untereinander.

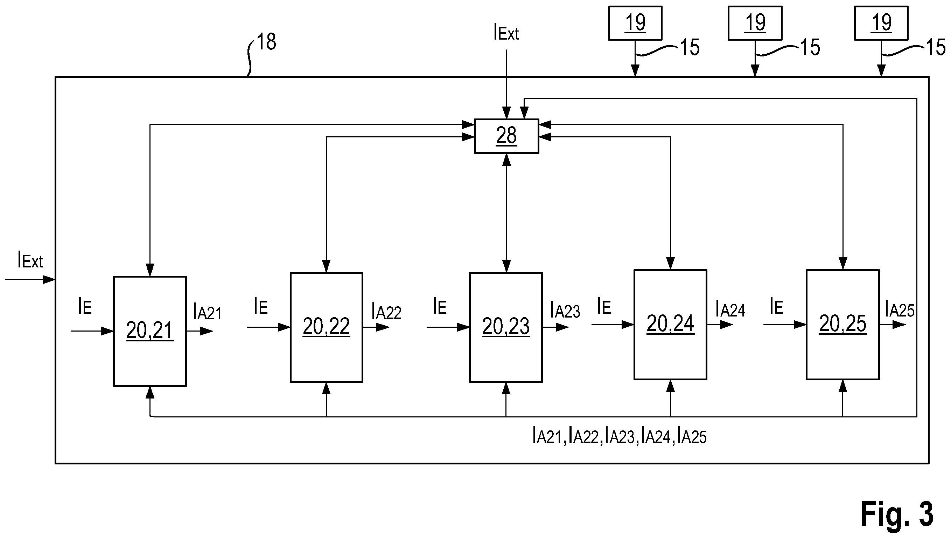

In Fig. 3 ist eine schematische Darstellung des Funktionsprinzips des Prozesssupervisors 28 gezeigt. Der Prozesssupervisor 28 koordiniert und managt die Einstellautomaten 20 in der Weise, dass eine Kommunikation der Einstellautomaten 20 zum Austausch ihrer Ausgangsdaten I_{A21}, I_{A22}, I_{A23}, I_{A24}, I_{A25} untereinander von dem Prozesssupervisor 28 veranlasst wird. Die jeweiligen Ausgangsdaten I_{A21}, I_{A22}, I_{A23}, I_{A24}, I_{A25} der Einstellautomaten 20 werden dabei entweder zunächst an den Prozesssupervisor 28 übermittelt, welcher diese an zumindest einen anderen Einstellautomaten 20 weiterleitet, oder unmittelbar an zumindest einen anderen Einstellautomaten 20 übermittelt, wobei der Prozesssupervisor 28 eine entsprechende Anweisung zur Übermittlung generiert.

Das Fahrerassistenzsystem 18 als auch der Prozesssupervisor 28 sind dazu eingerichtet, externe Daten I_{Ext} zu berücksichtigen. Insbesondere umfassen die externen Daten I_{Ext} Informationen über äußere, von den Sensorsystemen 19 des Mähdreschers 1 nicht direkt messbare Einflüsse. Externe Daten sind unter anderem aktuelle Wetterdaten sowie Logistikdaten, welche einen Einfluss auf die Durchführung des Gesamtbearbeitungsprozesses haben können. Dazu kann aber auch eine Eingabe durch die Bedienperson des Mähdreschers wie auch eine strategische Vorgabe einer den Betrieb von Erntefahrzeugen koordinierenden Person, wie einen Betriebsleiter einer Hofstelle oder eines Lohnunternehmers, zählen. Logistikdaten umfassen beispielsweise Terminvorgaben für das Abernten eines Schlages oder die Koordination des Mähdreschers 1 als einem Erntefahrzeug innerhalb einer mehrere Ernte- und Transportfahrzeuge umfassenden Erntelogistickette. Hierzu ist der Prozesssupervisor 28 respektive das Fahrerassistenzsystem 18 zum Empfang externer Daten I_{Ext} eines zentralen Flottenmanagementsystems eingerichtet, welche neben Informationen zu einem zu bearbeitenden Schlag auch Informationen über die vorhandenen Transportquantitäten enthalten. Externe Daten I_{Ext} können auch von anderen Ernte- und/oder Transportfahrzeugen übermittelt werden, die Teil der Erntelogistikkette sind. Aufgrund dessen passt der Prozesssupervisor 28 einzelne Vorgaben der Teilstrategien 26b der Einstellautomaten 20 an. So kann beispielsweise bei einer begrenzt vorhandenen Transportkapazität der Prozessqualitätsparameter "Durchsatz" des Mähdreschers 1 durch eine entsprechende Ansteuerung der Einstellautomaten 20, insbesondere des Vorsatzgeräteautomaten 21 und des Dreschautomaten 22, darauf abgestimmt werden, den Durchsatz zu reduzieren. Zugleich kann die Zielerreichung anderer Prozessqualitätsparameter, welche die Ergebnisqualität bzw. Verluste der Arbeitsorgane 16 zum Gegenstand haben, durch eine entsprechende Ansteuerung der Einstellautomaten 20 stärker berücksichtigt werden. Hierzu werden seitens des Prozesssupervisors 28 die Teilstrategien 26b autonom angepasst bzw. abweichend vorgegeben.

Darüber hinaus leitet der Prozesssupervisor 28 aus den externen Daten autonom Maßnahmen ab, welche in den Gesamtbearbeitungsprozess des Mähdreschers 1 integriert werden, um diesen möglichst optimal zu gestalten. So lassen sich beispielsweise auftretende Wartezeiten, die sich aus den externen Daten I_{Ext} zur Logistikplanung ableiten lassen, nutzen, um die Durchführbarkeit gegebenenfalls notwendige Wartungs-, Umbau- oder Einstellarbeiten der Bedienperson des Mähdreschers 1 zu signalisieren. So kann durch den Prozesssupervisor 28 beispielsweise innerhalb einer solchen Wartezeit die Durchführung einer Überprüfung und erforderlichenfalls Anpassung der Kalibrierung einzelner Sensoren der Sensorsysteme 19 vorgeschlagen werden. Ebenfalls können von dem Prozesssupervisor 28 Wartungsarbeiten vorgeschlagen werden, die lediglich bei ausgesetztem Materialfluss durch den Mähdrescher 1 oder die das Verlassen der Kabine erfordern, wie das Einstellen von Dreschkorbklappen.

Zur Optimierung des Gesamtbearbeitungsprozesses koordiniert der Prozesssupervisor 28 die Einstellautomaten 20 hinsichtlich der Durchführung der Teilbearbeitungsprozesse. Dabei ist der Prozesssupervisor 28 dazu eingerichtet, einen oder mehrere Einstellautomaten 20 koordiniert anzusteuern und betriebssituationsabhängig eine Gewichtungsverschiebung in der Erreichung oder Einhaltung von Prozessqualitätsparametern, die im Rahmen der ausgewählten Teilstrategie 26b vorgegeben werden, zumindest eines Einstellautomaten 20 durchzuführen. Hierbei wird ein suboptimaler Betrieb zumindest eines Arbeitsorgans 16 in Kauf genommen, wenn dies dem Ziel des optimierten Gesamtbearbeitungsprozesses zu Gute kommt. Neben der autonomen Vorgabe von abweichenden Teilstrategien 26b durch den Prozesssupervisor 28 lassen sich durch den Prozesssupervisor 28 auch Einstellgrenzen oder Zielwerte für die Prozessqualitätsparameter eines oder mehrerer Einstellautomaten 20 autonom verändern. So wird eine Reduzierung eines "Bruchkornanteils" als Prozessqualitätsparameter dadurch erreicht, dass der Zielwert für den Prozessqualitätsparameter "Kornanteil" in der Überkehr reduziert wird. Dies ist beispielsweise durch eine Erhöhung des Prozessqualitätsparameters "Sauberkeit" erreichbar, indem der der Reinigungsvorrichtung 6 zugeordnete Reinigungsautomat 24 einen oder mehrere Einstellparameter, wie die Sieböffnungsweite, entsprechend verändert. Ein weiteres Beispiel stellt das Absenken der Prozessqualitätsparameter "Verlustgrenze", welcher entsprechend der unterschiedlichen Arbeitsorgane 16 verschiedene Ausprägungen haben kann, bei einem Erreichen eines anderen Grenzwertes der Prozessqualitätsparameter oder der Einstellparameter, wie dem Erreichen der maximalen Motorauslastung, dar.

Der Prozesssupervisor 28 ist zudem zur Optimierung des Gesamtbearbeitungsprozesses bei einem Betrieb des Mähdreschers 1 im Teillastbetrieb eingerichtet. Wird beispielsweise der Mähdrescher 1 mit einer Fahrgeschwindigkeit auf dem abzuerntenden Feld betrieben, welche zu einem unterhalb des möglichen maximalen Durchsatzes an Erntegut liegt, während durch die Bedienperson die Ernteprozessstrategievorgabe "Maximaler Durchsatz" ausgewählt wurde, so nutzt der Prozesssupervisor 28 die verfügbaren Ressourcen der Arbeitsorgane 16, um deren Vorgaben der Teilstrategien 26b zu verändern bzw. deren Priorisierung. Im Zuge dessen lassen sich die Zielwerte für die Prozessqualitätsparameter "Verlustgrenze" oder "Bruchkornanteil" durch den Prozesssupervisor 28 verändern, um eine höhere Qualität bei der Bearbeitung des Erntegutstromes EG zu erzielen.

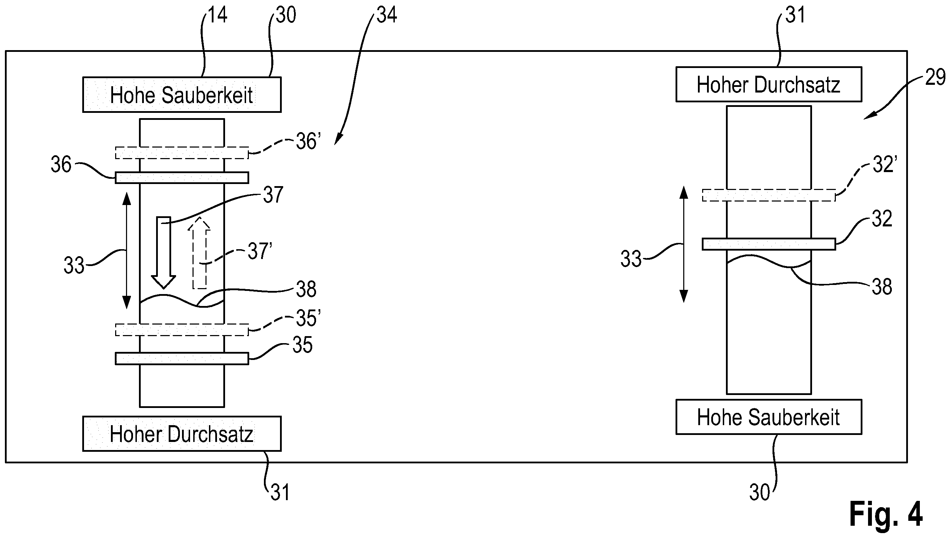

Die Darstellung in Fig. 4 zeigt beispielhaft eine schematische Darstellung einer Visualisierung einer Bedieneroberfläche durch die grafische Benutzerschnittstelle 14 zur Darstellung und Einstellung einer ausgewählten Erntestrategievorgabe 26a oder einer Teilstrategie 26b und zumindest eines korrespondierenden Prozessqualitätsparameters, im dargestellten Ausführungsbeispiel beispielhaft Sauberkeit.

Eine alternative Ausführung eines virtuellen Bedienelements 29 ist in der dargestellten Ausführungsvariante als Schiebsteller mit nur einem virtuellen Verstellelement 32 ausgebildet. Denkbar ist ebenfalls eine Ausführung des virtuellen Bedienelementes 29 als ein Drehsteller. Mit dem Bezugszeichen 30 ist beispielhaft ein Anzeigeelement eines Prozessqualitätsparameters "Hohe Sauberkeit" und mit dem Bezugszeichen 31 ist beispielhaft ein Anzeigeelement eines Prozessqualitätsparameter "Hoher Durchsatz" bezeichnet, welche aus der ausgewählten Ernteprozessstrategievorgabe 26a resultieren. Dabei können die Anzeigeelemente 30, 31 als betätigbare Buttons ausgeführt sein, durch deren Betätigung das virtuelle Verstellelement 32 verstellbar ist.

Zudem ist ein weiteres virtuelles Bedienelement 34, welches ebenfalls als Schiebsteller ausgebildet ist, als alternative eine Ausführungsform dargestellt, welches ebenfalls mittels der Anzeigeelemente 30, 31 den Prozessqualitätsparameter "Hohe Sauberkeit" und "Hoher Durchsatz" visualisiert und deren Einstellung ermöglicht. Hierzu weist das virtuelle Bedienelement 34 zwei virtuelle Verstellelemente 35 und 36 auf. Das virtuelle Verstellelement 35 repräsentiert dabei einen Minimalwert der Einstellgrenze des Prozessqualitätsparameters "Hohe Sauberkeit", visualisiert durch das Anzeigeelement 30, während das andere virtuelle Verstellelement 36 einen Maximalwert der Einstellgrenze des Prozessqualitätsparameters "Hohe Sauberkeit" darstellt. Die Ein- bzw. Verstellung der Einstellgrenzen erfolgt im Rahmen der Gesamtoptimierung, wie bereits weiter oben ausgeführt, zunächst autonom durch den Prozesssupervisor 28. Darüber hinaus ermöglicht eine Interaktion der Bedienperson mit dem Prozesssupervisor 28 eine Veränderung der Gewichtung der ausgewählten Ernteprozessstrategievorgabe 26a, indem die Bedienperson das virtuelle Verstellelement 32 in Pfeilrichtung 33 in Richtung des Prozessqualitätsparameters "Hohe Sauberkeit", oder wie dargestellt in Richtung des Prozessqualitätsparameters "Hoher Durchsatz", visualisiert durch das Anzeigeelement 31, verschiebt, was durch das strichliniert dargestellte virtuelle Verstellelement 32' angedeutet ist. Die sich daraus ergebende Änderung der Einstellgrenzen für den beispielhaft dargestellten Prozessqualitätsparameters "Hohe Sauberkeit" wird durch die ebenfalls strichliniert dargestellten virtuellen Verstellelement 35' und 36' veranschaulicht.

Eine Veränderung der Einstellgrenzen lässt sich ebenfalls im Rahmen der Interaktion zwischen der Bedienperson und dem Prozesssupervisor 28 bewirken, indem das virtuelle Verstellelement 35 für den Minimalwert der Einstellgrenze und das virtuelle Verstellelement 36 für den Maximalwert der Einstellgrenze von der Bedienperson gemäß der Pfeilrichtung 33 verschoben werden. Diese unmittelbare Beeinflussung der Einstellgrenzen für den Prozessqualitätsparameter "Hohe Sauberkeit" wird von dem Prozesssupervisor 28 bei der Gesamtoptimierung berücksichtigt.

Weiterhin kann die Bedienperson durch Auswahl eines Tendenzindikators 37, 37' eine angestrebte Tendenz vorgeben, welche von dem Prozesssupervisor 28 bei der Ansteuerung des Reinigungsautomaten 24 berücksichtigt werden soll.

Des Weiteren wird durch die virtuellen Bedienelemente 29 bzw. 34 zusätzlich ein aktueller Istwert 38 des betreffenden Prozessqualitätsparameters dargestellt. Dies ermöglicht es der Bedienperson, den Einfluss bzw. die Auswirkungen der von ihr im Rahmen der Interaktion mit dem Prozesssupervisor 28 vorgenommenen Änderungen zeitnah nachzuverfolgen.

**Bezugszeichenliste**

| | | | |
|---|---|---|---|
| 1 | Mähdrescher | 20 | Einstellautomat |
| 2 | Vorsatzgerät | 21 | Vorsatzgeräteautomat |
| 2a | Messerbalken | 21a | Haspelautomat |
| 2b | Haspel | 21b | Einzugsautomat |
| 2c | Einzugsschnecke | 22 | Dreschautomat |
| 3 | Schrägförderer | 23 | Trennautomat |
| 4 | Dreschvorrichtung | 24 | Reinigungsautomat |
| 4a | Dreschtrommel | 25 | Verteilautomat |
| 4b | Dreschkorb | 26 | Speicher |
| 5 | Trennvorrichtung | 26a | Ernteprozessstrategievorgabe |
| 6 | Reinigungsvorrichtung | 26b | Teilstrategie |
| 6a | Gebläse | 27 | Rechenvorrichtung |
| 6b | Obersieb | 28 | Prozesssupervisor |
| 6c | Untersieb | 29 | Virtueller Schieberegler |
| 7 | Häcksel- und Verteilvorrichtung | 30 | Anzeigeelement |
| 7a | Spreufördereinrichtung | 31 | Anzeigeelement |
| 7b | Häckseleinrichtung | 32, 32' | Virtuelles Verstellelement |
| 7c | Verteileinrichtung | 33 | Verschieberichtung |
| 8 | Förderboden | 34 | Visualisierungselement |
| 9 | Rücklaufboden | 35, 35' | Virtuelles Verstellelement |
| 10 | Fördervorrichtung | 36, 36' | Virtuelles Verstellelement |
| 11 | Korntank | 37 | Tendenzindikator |
| 12 | Strohklappe | 38 | Istwert |
| 13 | Fahrerkabine | EG | Erntegutstrom |
| 14 | Benutzerschnittstelle | I_{E} | Eingangsdaten |
| 15 | Bussystem | I_{A21} | Ausgangsdaten |
| 16 | Arbeitsorgan | I_{A22} | Ausgangsdaten |
| 17 | Erntegutbehandlungsmittel | I_{A23} | Ausgangsdaten |
| 18 | Fahrerassistenzsystem | I_{A24} | Ausgangsdaten |
| 19 | Sensorsystem | I_{Ext} | Externe Daten |

## Patentansprüche

1. Mähdrescher (1), umfassend:
- mehrere Arbeitsorgane (16) zur Durchführung spezifischer Teilbearbeitungsprozesse eines Gesamtbearbeitungsprozesses zur Verarbeitung von Erntegut,
- ein Fahrerassistenzsystem (18) zur Ansteuerung der Arbeitsorgane (16), welches einen Speicher (26) zum Hinterlegen von Daten (26a, 26b), eine Rechenvorrichtung (27) zur Verarbeitung der im Speicher (26) hinterlegten Daten (26a, 26b) sowie eine grafische Benutzerschnittstelle (14) aufweist, wobei das Fahrerassistenzsystem (18) mit den jeweiligen zur Durchführung der Teilbearbeitungsprozesse vorgesehenen Arbeitsorganen (16) eigenständig arbeitende Einstellautomaten (20) bildet, welche der Optimierung der Ansteuerung der Arbeitsorgane (16) zur Durchführung der Teilarbeitsprozesse dienen, wobei jeder Einstellautomat (20) eingerichtet ist Eingangsdaten (I_{E}) zu empfangen und aus diesen autonom jeweils arbeitsorganspezifische Ausgangsdaten (I_{A21}, I_{A22}, I_{A23}, I_{A24}, I_{A25}) zu generieren, welche zu einer Änderung von Einstellparametern der zugehörigen Arbeitsorgane (16) verwendet werden, wobei dem Fahrerassistenzsystem (18) ein Prozesssupervisor (28) zugeordnet ist, der eingerichtet ist, einzelne Einstellautomaten (20) anzusteuern und einen Datenaustausch der Einstellautomaten (20) untereinander anzusteuern, wobei der Prozesssupervisor (28) dazu eingerichtet ist, mit einer Bedienperson zu interagieren, wobei durch die Interaktion wenigstens ein Parameter zumindest eines zur Ansteuerung durch den Prozesssupervisor (28) im Speicher (26) hinterlegten Regelungsprozesses editierbar ist und der Prozesssupervisor (28) dazu eingerichtet ist, den Gesamtbearbeitungsprozess des Mähdreschers (1) gemäß einer Ernteprozessstrategievorgabe (26a) durch eine aufeinander abgestimmte Ansteuerung einzelner Einstellautomaten (20) autonom zu optimieren.

2. Mähdrescher (1) nach Anspruch 1, **dadurch gekennzeichnet, dass** zur Durchführung eines jeweiligen Teilbearbeitungsprozesses mehrere unterschiedliche Teilstrategien (26b) hinterlegt sind, die von den jeweiligen Einstellautomaten (20) zur Optimierung des diesen zugeordneten Arbeitsorgans (16) heranziehbar sind.

3. Mähdrescher (1) nach einem der Ansprüche 1 bis2, **dadurch gekennzeichnet, dass** der Prozesssupervisor (28) dazu eingerichtet ist, einen oder mehrere Einstellautomaten (20) koordiniert anzusteuern und betriebssituationsabhängig eine Gewichtungsverschiebung in der Erreichung oder Einhaltung von Prozessqualitätsparametern zumindest eines Einstellautomaten (20) durchzuführen.

4. Mähdrescher (1) nach Anspruch 3, **dadurch gekennzeichnet, dass** der Prozesssupervisor (28) dazu eingerichtet ist, aufgrund der Gewichtungsverschiebung den zumindest einen Einstellautomaten (20) derart anzusteuern, um das betreffende, von dem jeweiligen Einstellautomaten (20) angesteuerte Arbeitsorgan (16) außerhalb des jeweiligen optimalen Betriebspunktes zu betreiben.

5. Mähdrescher (1) nach Anspruch 3 oder 4, **dadurch gekennzeichnet, dass** der Prozesssupervisor (28) zur autonomen Vorgabe von Teilstrategien (26b) eingerichtet ist, aufgrund derer die Einstellautomaten (20) die jeweiligen Arbeitsorgane (16) ansteuern.

6. Mähdrescher (1) nach einem der vorangehenden Ansprüche, **dadurch gekennzeichnet, dass** der Prozesssupervisor (28) zur autonomen Vorgabe von Einstellgrenzen eingerichtet ist, innerhalb derer die Einstellautomaten (20) die jeweiligen Arbeitsorgane (16) ansteuern

7. Mähdrescher (1) nach einem der vorangehenden Ansprüche, **dadurch gekennzeichnet, dass** der Prozesssupervisor (28) zur autonomen Vorgabe von Zielwerten der Prozessqualitätsparameter eingerichtet ist, innerhalb derer die Einstellautomaten (20) die jeweiligen Arbeitsorgane (16) ansteuern.

8. Mähdrescher (1) nach einem der vorangehenden Ansprüche, **dadurch gekennzeichnet, dass** der Prozesssupervisor (28) zur Optimierung des Gesamtbearbeitungsprozesses bei einem Betrieb des Mähdreschers (1) im Teillastbetrieb eingerichtet ist.

9. Mähdrescher (1) nach einem der vorangehenden Ansprüche, **dadurch gekennzeichnet, dass** zur Abbildung funktionaler Zusammenhänge eines von einem Arbeitsorgan (16) durchzuführenden Teilbearbeitungsprozesses mindestens einem Prozessqualitätsparameter zumindest ein adaptives Kennlinienfeld zugeordnet ist und dass dieser mindestens eine Prozessqualitätsparameter als Ausgangsgröße des zumindest einen Kennfeldes definiert ist.

10. Mähdrescher (1) nach einem der vorangehenden Ansprüche, **dadurch gekennzeichnet, dass** der Prozesssupervisor (28) zum Empfang von externen Daten (I_{Ext}) eingerichtet ist, welche einen Einfluss auf die Prozessqualitätsparameter der Teilbearbeitungsprozesse haben.

11. Mähdrescher (1) nach Anspruch 10, **dadurch gekennzeichnet, dass** der Prozesssupervisor (28) zur autonomen Ableitung von Maßnahmen in Abhängigkeit von den empfangenen externen Daten (I_{Ext}) eingerichtet ist.

12. Mähdrescher (1) nach einem der vorangehenden Ansprüche, **dadurch gekennzeichnet, dass** als Arbeitsorgane (16) zumindest ein Vorsatzgerät (2), eine Dreschvorrichtung (4), eine Abscheidevorrichtung (5), eine Reinigungsvorrichtung (6) sowie eine Verteilvorrichtung (7) vorgesehen sind.

13. Mähdrescher (1) nach einem der vorangehenden Ansprüche, **dadurch gekennzeichnet, dass** als Einstellautomaten (20) zumindest ein Vorsatzgeräteautomat (21), ein Dreschautomat (22), ein Trennautomat (23), ein Reinigungsautomat (24) sowie ein Verteilautomat (25) vorgesehen sind.

14. Mähdrescher (1) nach einem der vorangehenden Ansprüche, **dadurch gekennzeichnet, dass** zumindest ein Einstellautomat (20) zumindest zwei Unterautomaten (21a, 21b) aufweist.

15. Mähdrescher (1) nach einem der vorangehenden Ansprüche, **dadurch gekennzeichnet, dass** der Prozesssupervisor (28) dazu eingerichtet ist, wenigstens eine Vorgabe für eine Ernteprozessstrategievorgabe (26a) und/oder einen Prozessqualitätsparameter durch die Interaktion mit der Bedienperson als externe Daten (I_{Ext}) zu empfangen und einzustellen.

16. Mähdrescher (1) nach einem der vorangehenden Ansprüche, **dadurch gekennzeichnet, dass** der Prozesssupervisor (28) dazu eingerichtet ist, mit der Bedienperson sprachgesteuert zu interagieren.

17. Mähdrescher (1) nach einem der vorangehenden Ansprüche, **dadurch gekennzeichnet, dass** der Prozesssupervisor (28) dazu eingerichtet ist, die mittelbare oder unmittelbare stattfindende Interaktion zwischen dem Fahrerassistenzsystem (18) und der Bedienperson zu erfassen und auszuwerten.

18. Mähdrescher (1) nach einem der vorangehenden Ansprüche, **dadurch gekennzeichnet, dass** der Prozesssupervisor (28) dazu eingerichtet ist, aufgrund von Plausibilitätsprüfungen und/oder durch eine Analyse einer Gesamtmaschineneinstellung selbsttätig mit der Bedienperson in Interaktion zu treten.

19. Mähdrescher (1) nach einem der vorangehenden Ansprüche, **dadurch gekennzeichnet, dass** der Prozesssupervisor (28) dazu eingerichtet ist, die grafische Benutzerschnittstelle (14) bei einer Veränderung einer Ernteprozessstrategievorgabe (26a) oder einer Teilstrategie (26b) durch eine Bedienperson anzusteuern, um daraus resultierende Veränderungen von Einstellgrenzen (35, 35'; 36, 36') wenigstens eines Prozessqualitätsparameters zu visualisieren.

20. Mähdrescher (1) nach einem der vorangehenden Ansprüche, **dadurch gekennzeichnet, dass** die grafische Benutzerschnittstelle (14) zur Visualisierung der Einstellgrenzen (35, 35'; 36, 36') auf der Basis von Absolutwerten des wenigstens einen Prozessqualitätsparameters eingerichtet ist.

21. Mähdrescher (1) nach einem der vorangehenden Ansprüche, **dadurch gekennzeichnet, dass** die grafische Benutzerschnittstelle (14) zur Visualisierung einer Tendenz des wenigstens einen Prozessqualitätsparameters eingerichtet ist.

22. Mähdrescher (1) nach einem der vorangehenden Ansprüche, **dadurch gekennzeichnet, dass** die grafische Benutzerschnittstelle (14) dazu eingerichtet ist, zusätzlich einen aktuellen Istwert (38) des wenigstens einen Prozessqualitätsparameters darzustellen.

23. Verfahren zum Betreiben eines Mähdreschers, welcher mehrere Arbeitsorgane (16) umfasst, mittels der spezifische Teilbearbeitungsprozesse eines Gesamtbearbeitungsprozesses zur Verarbeitung von Erntegut durchgeführt werden,
- sowie ein Fahrerassistenzsystem (18) zur Ansteuerung der Arbeitsorgane (16) aufweist, welches einen Speicher (26) zum Hinterlegen von Daten (26a, 26b), eine Rechenvorrichtung (27) zur Verarbeitung der im Speicher (26) hinterlegten Daten (26a, 26b), sowie eine grafische Benutzerschnittstelle (14) umfasst, wobei durch das Fahrerassistenzsystem (18) mit den jeweiligen zur Durchführung der Teilbearbeitungsprozesse vorgesehenen Arbeitsorganen (16) eigenständig arbeitende Einstellautomaten (20) gebildet werden, welche der Optimierung der Ansteuerung der Arbeitsorgane (16) zur Durchführung der Teilarbeitsprozesse dienen, wobei jeder Einstellautomat (20) Eingangsdaten (I_{E})empfängt und aus diesen autonom jeweils arbeitsorganspezifische Ausgangsdaten (I_{A21}, I_{A22}, I_{A23}, I_{A24}, I_{A25}) generiert, welche zu einer Änderung von Einstellparametern der zugehörigen Arbeitsorgane (16) verwendet werden wobei eine Ansteuerung einzelner Einstellautomaten (20) und eines Datenaustauschs der Einstellautomaten (20) untereinander durch einen dem Fahrerassistenzsystem (18) zugeordneten Prozesssupervisor (28) durchgeführt wird, wobei der Prozesssupervisor (28) dazu eingerichtet ist, mit einer Bedienperson zu interagieren, wobei durch die Interaktion wenigstens ein Parameter zumindest eines zur Ansteuerung durch den Prozesssupervisor (28) im Speicher (26) hinterlegten Regelungsprozesses editiert wirdund der Prozesssupervisor (28) dazu eingerichtet ist, den Gesamtbearbeitungsprozess des Mähdreschers (1) gemäß einer Ernteprozessstrategievorgabe (26a) durch eine aufeinander abgestimmte Ansteuerung einzelner Einstellautomaten (20) autonom zu optimieren.

## Claims

1. A combine harvester (1) including:
- a plurality of working members (16) for carrying out specific partial processing processes of an overall processing process for processing crop material,
- a driver assist system (18) for actuating the working members (16), which has a memory (26) for storing data (26a, 26b), a computing device (27) for processing the data (26a, 26b) stored in the memory (26) and a graphical user interface (14), wherein the driver assist system (18) with the respective working members (16) for carrying out the partial processing processes forms independently operating automatic setting devices (20) which serve for optimisation of actuation of the working members (16) for carrying out the partial working processes, wherein each automatic setting device (20) is adapted to receive input data (I_{E}) and to generate autonomously from same respective working member-specific output data (I_{A21}, I_{A22}, I_{A23} ,I_{A24}, I_{A25}) which are used for a change in setting parameters of the associated working members (16), wherein associated with the driver assist system (18) is a process supervisor (28) which is adapted to actuate individual automatic setting devices (20) and to actuate data exchange of the automatic setting devices (20) with each other, wherein the process supervisor (28) is adapted to interact with an operator, wherein at least one parameter of at least one closed-loop control process stored in the memory (26) for actuation by the process supervisor (28) can be edited by the interaction and the process supervisor (28) is adapted to optimise autonomously the overall processing process of the combine harvester (1) in accordance with a harvesting process strategy specification (26a) by mutually matched actuation of individual automatic setting devices (20).

2. A combine harvester (1) according to claim 1 **characterised in that** for carrying out a respective partial processing process a plurality of different sub-strategies (26b) are stored, which can be used by the respective automatic setting device (20) for optimising the working member (16) associated therewith.

3. A combine harvester (1) according to one of claims 1 and 2 **characterised in that** the process supervisor (28) is adapted to actuate one or more automatic setting devices (20) in coordinated relationship and in dependence on the operating situation to implement a weighting shift in regard to attainment or maintaining process quality parameters of at least one automatic setting device (20).

4. A combine harvester (1) according to claim 3 **characterised in that** the process supervisor (28) is adapted on the basis of the weighting shift to actuate the at least one automatic setting device (20) in such a way as to operate the working member (16) in question which is actuated by the respective automatic setting device (20) outside the respective optimum operating point.

5. A combine harvester (1) according to claim 3 or claim 4 **characterised in that** the process supervisor (28) is adapted for autonomous specification of sub-strategies (26b), on the basis of which the automatic setting devices (20) actuate the respective working members (16).

6. A combine harvester (1) according to one of the preceding claims **characterised in that** the process supervisor (28) is adapted for autonomous specification of setting limits, within which the automatic setting devices (20) actuate the respective working members (16).

7. A combine harvester (1) according to one of the preceding claims **characterised in that** the process supervisor (28) is adapted for autonomous specification of target values of the process quality parameters, within which the automatic setting devices (20) actuate the respective working members (16).

8. A combine harvester (1) according to one of the preceding claims **characterised in that** the process supervisor (28) is adapted to optimise the overall processing process in operation of the combine harvester (1) in the partial-load mode of operation.

9. A combine harvester (1) according to one of the preceding claims **characterised in that** to map functional relationships of a partial processing process to be carried out by a working member (16) at least one adaptive family of characteristic curves is associated with at least one process quality parameter and said at least one process quality parameter is defined as an output variable of the at least one family of characteristic curves.

10. A combine harvester (1) according to one of the preceding claims **characterised in that** the process supervisor (28) is adapted to receive external data (I_{Ext}) which have an influence on the process quality parameters of the partial processing processes.

11. A combine harvester (1) according to claim 10 **characterised in that** the process supervisor (28) is adapted for autonomous derivation of measures in dependence on the received external data (I_{Ext}).

12. A combine harvester (1) according to one of the preceding claims **characterised in that** at least one front attachment (2), a threshing apparatus (4), a separating apparatus (5), a cleaning apparatus (6) and a distribution apparatus (7) are provided as the working members (16).

13. A combine harvester (1) according to one of the preceding claims **characterised in that** at least one automatic front attachment (21), an automatic threshing apparatus (22), an automatic separating apparatus (23), an automatic cleaning apparatus (24) and an automatic distribution apparatus (25) are provided as the automatic setting devices (20).

14. A combine harvester (1) according to one of the preceding claims **characterised in that** at least one automatic setting device (20) has at least two automatic sub-devices (21a, 21b).

15. A combine harvester (1) according to one of the preceding claims **characterised in that** the process supervisor (28) is adapted to receive and set at least one specification for the harvesting process strategy specification (26a) and/or a process quality parameter by the interaction with the operator as external data (I_{Ext}).

16. A combine harvester (1) according to one of the preceding claims **characterised in that** the process supervisor (28) is adapted to interact with the operator under voice control.

17. A combine harvester (1) according to one of the preceding claims **characterised in that** the process supervisor (28) is adapted to detect and evaluate the indirect or direct interaction occurring between the driver assist system (8) and the operator.

18. A combine harvester (1) according to one of the preceding claims **characterised in that** the process supervisor (28) is adapted on the basis of plausibility checks and/or by an analysis of an overall machine setting to interact automatically with the operator.

19. A combine harvester (1) according to one of the preceding claims **characterised in that** the process supervisor (28) is adapted to actuate the graphical user interface (14) upon a change in a harvesting process strategy specification (26a) or a sub-strategy (26b) by an operator in order to display changes resulting therefrom in setting limits (35, 35', 36, 36') of at least one process quality parameter.

20. A combine harvester (1) according to one of the preceding claims **characterised in that** the graphical user interface (14) is adapted to display the setting limits (35, 35', 36, 36') on the basis of absolute values of the at least one process quality parameter.

21. A combine harvester (1) according to one of the preceding claims **characterised in that** the graphical user interface (14) is adapted to display a trend in respect of the at least one process quality parameter.

22. A combine harvester (1) according to one of the preceding claims **characterised in that** the graphical user interface (14) is adapted additionally to display a current actual value (38) of the at least one process quality parameter.

23. A method of operating a combine harvester which includes a plurality of working members (16), by means of which specific partial processing processes of an overall processing process are carried out for processing crop material,
- and includes a driver assist system (18) for actuating the working members (16), which has a memory (26) for storing data (26a, 26b), a computing device (27) for processing the data (26a, 26b) stored in the memory (26) and a graphical user interface (14), wherein independently operating automatic setting devices (20) are formed by the driver assist system (18) with the respective working members (16) provided for carrying out the partial processing processes, which automatic setting devices serve to optimise actuation of the working members (16) for carrying out the partial processing processes, wherein each automatic setting device (20) receives input data (I_{E}) and generates autonomously therefrom respective working member-specific output data (I_{A21}, I_{A22}, I_{A23}, I_{A24}, I_{A25}) which are used for a change in setting parameters of the associated working members, wherein actuation of individual automatic setting devices (20) and data exchange of the automatic setting devices (20) with each other is carried out by a process supervisor (28) associated with the driver assist system (18), wherein the process supervisor (28) is adapted to interact with an operator, wherein at least one parameter of at least one closed-loop control process stored in the memory (26) for actuation by the process supervisor (28) is edited by the interaction (26a) and the process supervisor (28) is adapted to optimise autonomously the overall processing process of the combine harvester (1) in accordance with a harvesting process strategy specification by mutually matched actuation of individual automatic setting devices (20).

## Revendications

1. Moissonneuse-batteuse (1) incluant :
- plusieurs organes de travail (16) pour exécuter des processus de traitement partiels spécifiques d'un processus de traitement global pour traiter du produit récolté,
- un système d'assistance à la conduite (18) pour commander les organes de travail (16), lequel comporte une mémoire (26) pour enregistrer des données (26a, 26b), un dispositif de calcul (27) pour traiter les données (26a, 26b) enregistrées dans la mémoire (26) ainsi qu'une interface utilisateur graphique (14),
le système d'assistance à la conduite (18) formant, avec les organes de travail respectifs (16) prévus pour exécuter les processus de traitement partiels, des automates de réglage à fonctionnement autonome (20) qui servent à optimiser la commande des organes de travail (16) pour exécuter les processus de travail partiels, chaque automate de réglage (20) étant agencé pour recevoir des données d'entrée (I_{E}) et pour générer, à partir de celles-ci, des données de sortie autonomes, spécifiques à chaque organe de travail I_{A21}, I_{A22}, I_{A23}, I_{A24}, I_{A215}) qui sont utilisées pour modifier des paramètres de réglage des organes de travail associés (16), au système d'assistance à la conduite (18) étant associé un superviseur de processus (28) qui est agencé pour commander des automates de réglage individuels (20) et pour commander un échange de données des automates de réglage (20) entre eux, le superviseur de processus (28) étant agencé pour interagir avec un opérateur, au moins un paramètre au moins d'un processus de régulation enregistré dans la mémoire (26) en vue d'une commande par l'intermédiaire du superviseur de processus (28) étant modifiable par le biais de l'interaction, et le superviseur de processus (28) étant agencé pour optimiser de façon autonome le processus de traitement global de la moissonneuse-batteuse (1) selon une prescription de stratégie de processus de récolte (26a) par l'intermédiaire d'une commande mutuellement adaptée d'automates de réglage individuels (20).

2. Moissonneuse-batteuse (1) selon la revendication 1, **caractérisée en ce que**, pour exécuter un processus de traitement partiel respectif, plusieurs stratégies partielles différentes (26b) sont enregistrées, lesquelles sont consultables par les automates de réglage respectifs (20) pour optimiser l'organe de travail (16) qui leur est associé.

3. Moissonneuse-batteuse (1) selon une des revendications 1 à 2, **caractérisée en ce que** le superviseur de processus (28) est agencé pour commander de manière coordonnée un ou plusieurs automates de réglage (20) et, en fonction de la situation de fonctionnement, procéder à un décalage de pondération pour atteindre ou respecter des paramètres de qualité de processus au moins d'un automate de réglage (20).

4. Moissonneuse-batteuse (1) selon la revendication 3, **caractérisée en ce que** le superviseur de processus (28) est agencé pour commander le au moins un automate de réglage (20) sur la base du décalage de pondération afin de faire fonctionner l'organe de travail correspondant (16), commandé par l'automate de réglage respectif (20), à l'extérieur du point de fonctionnement optimal respectif.

5. Moissonneuse-batteuse (1) selon la revendication 3 ou 4, **caractérisée en ce que** le superviseur de processus (28) est agencé pour la prescription autonome de stratégies partielles (26b) sur la base desquelles les automates de réglage (20) commandent les organes de travail respectifs (16) .

6. Moissonneuse-batteuse (1) selon une des revendications précédentes, **caractérisée en ce que** le superviseur de processus (28) est agencé pour la prescription autonome de limites de réglage à l'intérieur desquelles les automates de réglage (20) commandent les organes de travail respectifs (16).

7. Moissonneuse-batteuse (1) selon une des revendications précédentes, **caractérisée en ce que** le superviseur de processus (28) est agencé pour la prescription autonome de valeurs cibles des paramètres de qualité de processus, à l'intérieur desquelles les automates de réglage (20) commandent les organes de travail respectifs (16) .

8. Moissonneuse-batteuse (1) selon une des revendications précédentes, **caractérisée en ce que** le superviseur de processus (28) est agencé pour optimiser le processus de traitement global lors d'un fonctionnement de la moissonneuse-batteuse (1) en fonctionnement à charge partielle.

9. Moissonneuse-batteuse (1) selon une des revendications précédentes, **caractérisée en ce, que** pour représenter des relations fonctionnelles d'un processus de traitement partiel à exécuter par un organe de travail (16), au moins un diagramme de courbes caractéristiques adaptatif est associé à au moins un paramètre de qualité de processus, et **en ce que** ce au moins un paramètre de qualité de processus est défini comme une grandeur de sortie du au moins un diagramme caractéristique.

10. Moissonneuse-batteuse (1) selon une des revendications précédentes, **caractérisée en ce que** le superviseur de processus (28) est agencé pour recevoir des données extérieures (I_{Ext}) qui ont une influence sur les paramètres de qualité de processus des processus de traitement partiels.

11. Moissonneuse-batteuse (1) selon la revendication 10, **caractérisée en ce que** le superviseur de processus (28) est agencé pour la déduction autonome de mesures en fonction des données extérieures reçues (I_{Ext}).

12. Moissonneuse-batteuse (1) selon une des revendications précédentes, **caractérisée en ce que** comme organes de travail (16) sont prévus au moins un outil frontal (2), un dispositif de battage (4), un dispositif séparateur (5), un dispositif de nettoyage (6) ainsi qu'un dispositif d'épandage (7).

13. Moissonneuse-batteuse (1) selon une des revendications précédentes, **caractérisée en ce que** comme automates de réglage (20) sont prévus au moins un automate d'outil frontal (21), un automate de battage (22), un automate séparateur (23), un automate de nettoyage (24) ainsi qu'un automate d'épandage (25).

14. Moissonneuse-batteuse (1) selon une des revendications précédentes, **caractérisée en ce qu'**au moins un automate de réglage (20) comporte au moins deux sous-automates (21a, 21b).

15. Moissonneuse-batteuse (1) selon une des revendications précédentes, **caractérisée en ce que** le superviseur de processus (28) est agencé pour recevoir et instaurer au moins une prescription pour une prescription de stratégie de processus de récolte (26a) et/ou pour un paramètre de qualité de processus par l'intermédiaire de l'interaction avec l'opérateur en tant que données extérieures (I_{Ext}).

16. Moissonneuse-batteuse (1) selon une des revendications précédentes, **caractérisée en ce que** le superviseur de processus (28) est agencé pour interagir avec l'opérateur par commande vocale.

17. Moissonneuse-batteuse (1) selon une des revendications précédentes, **caractérisée en ce que** le superviseur de processus (28) est agencé pour détecter et analyser l'interaction indirecte ou directe qui a lieu entre le système d'assistance à la conduite (18) et l'opérateur.

18. Moissonneuse-batteuse (1) selon une des revendications précédentes, **caractérisée en ce que** le superviseur de processus (28) est agencé pour entrer automatiquement en interaction avec l'opérateur en fonction de contrôles de plausibilité et/ou par l'intermédiaire d'une analyse d'un réglage de machine global.

19. Moissonneuse-batteuse (1) selon une des revendications précédentes, **caractérisée en ce que** le superviseur de processus (28) est agencé pour commander l'interface utilisateur graphique (14) en cas de modification d'une prescription de stratégie de processus de récolte (26a) ou d'une stratégie partielle (26b) par un opérateur afin de visualiser les modifications de limites de réglage (35 ; 35' ; 36 ; 36') au moins d'un paramètre de qualité de processus.

20. Moissonneuse-batteuse (1) selon une des revendications précédentes, **caractérisée en ce que** l'interface utilisateur graphique (14) est agencée pour visualiser les limites de réglage (35 ; 35' ; 36 ; 36') sur la base de valeurs absolues du au moins un paramètre de qualité de processus.

21. Moissonneuse-batteuse (1) selon une des revendications précédentes, **caractérisée en ce que** l'interface utilisateur graphique (14) est agencée pour visualiser une tendance du au moins un paramètre de qualité de processus.

22. Moissonneuse-batteuse (1) selon une des revendications précédentes, **caractérisée en ce que** l'interface utilisateur graphique (14) est agencée pour représenter en plus une valeur réelle instantanée (38) du au moins un paramètre de qualité de processus.

23. Procédé de fonctionnement d'une moissonneuse-batteuse, laquelle inclut plusieurs organes de travail (16) au moyen desquels des processus de traitement partiels spécifiques d'un processus de traitement global peuvent être exécutés pour traiter du produit récolté,
- ainsi qu'un système d'assistance à la conduite (18) pour commander les organes de travail (16), lequel comporte une mémoire (26) pour enregistrer des données (26a, 26b), un dispositif de calcul (27) pour traiter les données (26a, 26b) enregistrées dans la mémoire (26) ainsi qu'une interface utilisateur graphique (14), par l'intermédiaire du système d'assistance à la conduite (18) étant formés, avec les organes de travail respectifs (16) prévus pour exécuter les processus de traitement partiels, des automates de réglage à fonctionnement autonome (20) qui servent à optimiser la commande des organes de travail (16) pour exécuter les processus de travail partiels, chaque automate de réglage (20) recevant des données d'entrée (I_{E}) et générant, à partir de celles-ci, des données de sortie autonomes, spécifiques à chaque organe de travail (I_{A21}, I_{A22}, I_{A23}, I_{A24}, I_{A215}) qui sont utilisées pour modifier des paramètres de réglage des organes de travail associés (16), une commande d'automates de réglage individuels (20) et d'un échange de données des automates de réglage (20) entre eux étant exécutée par l'intermédiaire d'un superviseur de processus (28) associé au système d'assistance à la conduite (18), le superviseur de processus (28) étant agencé pour interagir avec un opérateur, au moins un paramètre au moins d'un processus de régulation enregistré dans la mémoire (26) en vue d'une commande par l'intermédiaire du superviseur de processus (28) étant modifié par le biais de l'interaction, et le superviseur de processus (28) étant agencé pour optimiser de façon autonome le processus de traitement global de la moissonneuse-batteuse (1) selon une prescription de stratégie de processus de récolte (26a) par l'intermédiaire d'une commande mutuellement adaptée d'automates de réglage individuels (20).
